# FASCICULE DE BREVET EUROPEEN

(11) **EP 0 330 548 B1**
(45) Date de publication et mention de la délivrance du brevet: **21.04.1993**
(21) Numéro de dépôt: 89400426.6
(22) Date de dépôt: 15.02.1989
(51) Int. Cl.: B25J 19/00, F16F 15/28

(54) **Dispositif d'équilibrage des forces, notamment de pesanteur, agissant sur un bras de robot ou analogue**
Gewichtsausgleichsvorrichtung für den Arm eines Roboters oder dergleichen
Counter-balancing system for a robot arm or similar device

(30) Priorité: 26.02.1988 FR 8802423
(43) Date de publication de la demande: 30.08.1989
(73) Titulaire: Oppermann, René, 45120 Chalette-sur-Loing (FR); Salesse, Christian, F-93330 Neuilly-sur-Marne (FR)
(72) Inventeur: Oppermann, René, 45120 Chalette-sur-Loing (FR); Salesse, Christian, F-93330 Neuilly-sur-Marne (FR)
(74) Mandataire: Plaçais, Jean-Yves

(56) Documents cités:
- EP-A- 0 165 129
- AT-B- 380 818
- IBM TECHNICAL DISCLOSURE BULLETIN vol. 24, no. 9, février 1982, NEW YORK,US page 4497 - 4499; BRENNEMAN: "Counter-balancing system for revolute joint"

## Description

L'invention concerne un dispositif d'équilibrage des forces, notamment de pesanteur, agissant sur un bras de robot ou analogue, articulé en rotation autour d'un axe, notamment d'un axe horizontal.

On connaît déjà des dispositifs d'équilibrage de ce genre qui ont pour but de compenser les couples engendrés par les forces de pesanteur sur un bras de robot articulé en rotation autour d'un axe horizontal. Ainsi, l'énergie des organes d'entraînement du bras est consacrée seulement à l'entraînement de celui-ci.

Les dispositifs d'équilibrage de la technique antérieure avaient comme inconvénient majeur d'être approximatifs et de ne pas permettre de compenser exactement les couples des forces de pesanteur, et cela d'autant plus que ces couples varient en fonction de la position angulaire du bras de robot par rapport à la verticale.

Un dispositif d'équilibrage des forces de pesanteur conforme au préambule de la revendication 1, permettant de pallier cet inconvénient est décrit dans FR-A-2 565 153.

Le dispositif d'équilibrage du Brevet précité comprend une pièce auxiliaire rigide articulée autour d'un second axe parallèle à celui du bras de robot, ladite pièce comportant deux bras transversaux s'étendant de part et d'autre du second axe et ayant des extrémités symétriques par rapport à ce second axe, ces extrémités étant propres à s'appuyer contre une partie rectiligne d'un organe mobile en translation soumis à un effort de rappel vers une position initiale, proportionnel à la distance entre cette position initiale et la position occupée par l'organe mobile, ainsi que des moyens d'entraînement en rotation de ladite pièce auxiliaire autour du second axe à une vitesse angulaire égale, en valeur absolue, à la moitié de celle du bras de robot.

Dans ce dispositif d'équilibrage connu, l'ensemble est calé angulairement de telle sorte que, lorsque le bras de robot est vertical, les deux extrémités des bras transversaux appuient simultanément sur la partie rectiligne qui occupe la position initiale, l'organe mobile n'étant alors soumis à aucun effort de rappel, la constante de proportionnalité entre l'effort de rappel et l'amplitude du déplacement de l'organe mobile, et la distance du second axe à l'extrémité des bras transversaux étant choisies de telle sorte que l'équilibrage soit assuré.

Si ce dispositif connu permet d'équilibrer correctement le bras quelle que soit sa position angulaire, il souffre cependant de certains inconvénients.

Tout d'abord, le dispositif nécessite un guidage précis pour assurer la translation de l'organe mobile.

En outre, en dehors de la position initiale précitée, dans toutes les positions de l'organe mobile, l'effort d'appui exercé par la pièce auxiliaire sur la partie rectiligne de l'organe mobile est toujours en porte-à-faux par rapport à l'axe de translation de l'organe mobile. Il en résulte des risques de blocage du dispositif, et cela d'autant plus que l'effort de rappel auquel est soumis l'organe mobile est élevé. De plus, l'augmentation des efforts à équilibrer peut entraîner une augmentation de longueur des bras transversaux de la pièce auxiliaire, ce qui a pour conséquence d'augmenter encore le porte-à-faux et de ce fait les risques de blocage de l'organe mobile en translation. De ce fait, le dispositif d'équilibrage connu est, de par sa structure même, limité quant à la valeur du couple maximal à équilibrer.

Par ailleurs, ce dispositif connu nécessite, pour exercer cet effort de rappel, des organes, tels que des ressorts de compression, d'autant plus volumineux que l'effort de rappel à exercer est plus élevé.

Il faut également signaler que ce dispositif connu est particulièrement encombrant et donc difficile à loger dans une installation comportant un bras de robot, dans laquelle le volume disponible est souvent réduit.

Enfin, le dispositif d'équilibrage connu nécessite de modifier le bras de robot pour pouvoir s'y adapter.

On connaît par ailleurs, d'après le document IBM TECHNICAL DISCLOSURE BULLETIN (vol. 24, No 9, février 1982, NEW YORK, USA, pages 4497-4499, BRENNEMAN), un dispositif d'équilibrage qui fonctionne suivant le même principe que celui du Brevet précité et qui comporte deux pièces auxiliaires au lieu d'une seule pièce auxiliaire. Ces pièces auxiliaires tournent dans le même sens et comportent chacune un bras supportant un galet.

Ce dispositif d'équilibrage présente les mêmes inconvénients que le dispositif du Brevet précité et il nécessite en particulier des moyens de guidage pour pouvoir fonctionner sans risque de blocage ou de coincement. De plus le bras à pignon de chacune des pièces auxiliaires limite le débattement angulaire du bras de robot ou analogue sur lequel le dispositif est monté.

C'est, en conséquence, l'un des buts de l'invention de procurer un dispositif d'équilibrage du type de celui décrit dans les deux documents précités, qui permet d'éviter les inconvénients de la technique antérieure.

C'est, en particulier, un but de l'invention de procurer un tel dispositif d'équilibrage qui ne nécessite pas de moyens de guidage précis de l'organe mobile en translation et qui ne présente pas de risques de blocage.

C'est, en outre, un but de l'invention de procurer un tel dispositif d'équilibrage, d'un enconbrement réduit et en outre facilement adaptable à un bras de robot, sans qu'il soit nécessaire de procéder à des modifications ou transformations de ce dernier.

C'est encore un but de l'invention de procurer un tel dispositif d'équilibrage qui permette d'équilibrer des couples élevés tout en conservant une taille réduite au dispositif et en réduisant le plus possible les contraintes internes propres au dispositif.

Le dispositif d'équilibrage ou compensation des forces, en particulier de pesanteur, agissant sur un bras de robot, ou analogue, articulé en rotation autour d'un axe, en particulier horizontal, selon l'invention, est du type défini en introduction.

Conformément à l'invention, le dispositif selon le préambule de la revendication 1 est caractérisé en ce qu'il comprend au moins une autre pièce auxiliaire rigide, de manière à former un nombre pair de pièces auxiliaires articulées, respectivement autour d'axes parallèles et coplanaires, et supportant chacune deux bras transversaux ; des moyens de synchronisation propres à entraîner en rotation lesdites pièces auxiliaires à des vitesses angulaires égales en valeur absolue, mais deux à deux en sens opposés ; l'une au moins des pièces auxiliaires étant couplée auxdits moyens d'entraînement en rotation ; l'ensemble étant calé de telle sorte que, lorsque le bras de robot est dans une position dans laquelle le couple résultant appliqué autour de l'axe d'articulation du bras par les forces précitées est nul, les extrémités des bras transversaux de toutes les pièces auxiliaires appuient simultanément sur la partie rectiligne dans sa position initiale, et en ce que la partie rectiligne de l'organe mobile est soumise à l'action de moyens de rappel exerçant des forces de rappel dont la résultante est sensiblement coaxiale à la résultante des forces d'appui des extrémités des bras transversaux.

Dans cette position initiale, l'organe mobile n'est alors soumis à aucun effort de rappel, la constante de proportionnalité entre l'effort de rappel et l'amplitude du déplacement de l'organe mobile, et la distance de chacun des seconds axes à l'extrémité des bras transversaux sont choisies de telle sorte que l'équilibrage soit assuré.

Ainsi, les pièces auxiliaires exercent sur la partie rectiligne de l'organe mobile des efforts d'appui dont la résultante est dans l'axe de déplacement de cet organe mobile, et cela quelle que soit la longueur des bras transversaux de ces pièces auxiliaires.

Il n'est alors pas nécessaire d'assurer un guidage rigoureux en translation de l'organe mobile. Au surplus, dans certain cas, il est même possible de n'assurer aucun guidage.

Dans une forme de réalisation préférée de l'invention, le dispositif comprend deux pièces auxiliaires articulées respectivement autour de deux axes parallèles.

Dans cette forme de réalisation préférée, les moyens de synchronisation des pièces auxiliaires comprennent un ensemble de pignons de même diamètre, calés respectivement sur les axes des pièces auxiliaires et coopérant directement entre eux en sorte qu'une pièce auxiliaire soit entraînée en rotation en sens opposé par rapport à la ou les pièces auxiliaires immédiatement adjacentes.

De préférence, l'un des pignons de synchronisation fait également partie des moyens d'entraînement. Dans ce cas, ce pignon de synchronisation coopère avantageusement avec un pignon qui est calé sur l'axe de rotation du bras de robot et qui a un diamètre moitié de celui du pignon de synchronisation.

L'invention prévoit en outre que le dispositif comprend un second organe mobile symétrique de l'organe mobile par rapport au plan des axes des pièces auxiliaires, ce second organe mobile étant soumis à un effort de rappel de sens opposé à celui de l'organe mobile précité, en sorte que, dans la position initiale occupée par les deux organes mobiles, les extrémités des bras transversaux de toutes les pièces auxiliaires appuient simultanément sur ces deux organes mobiles.

Dans la description qui suit, donnée seulement à titre d'exemple, on se réfère au dessin annexé, sur lequel :
- la figure 1 est une vue en élévation d'une installation comportant un bras de robot et un dispositif d'équilibrage de ce bras conforme à un mode de réalisation de l'invention; et
- la figure 2 est une vue en coupe suivant la ligne II-II de la figure 1, faisant également apparaître les organes d'entraînement en rotation du bras de robot.

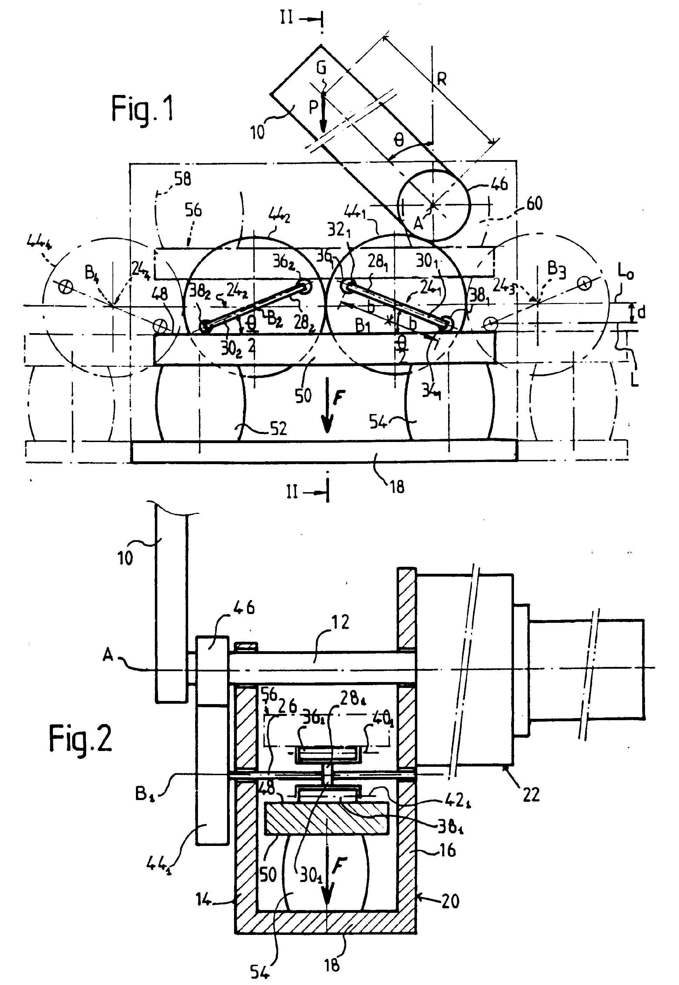

L'installation représentée aux figures 1 et 2 comprend un bras de robot 10 articulé en rotation autour d'un axe horizontal A au moyen d'un arbre 12 sur lequel est calé le bras 10. L'arbre 12 traverse deux flasques verticaux parallèles 14 et 16 reliés par un fond horizontal 18 et formant ainsi un bâti 20. Le bras 10 est propre à être entraîné en rotation, autour de son axe A, grâce à un groupe motoréducteur 22 fixé sur le flasque 16. Au cours de sa rotation, le bras 10 peut prendre toute position angulaire et former ainsi un angle ϑ quelconque entre la verticale ascendante issue de A et la direction principale du bras (figure 1). Les forces de gravité P agissent sur le centre d'action G du bras 10.

Pour compenser les forces de gravité s'exerçant sur le bras, l'installation comprend un dispositif d'équilibrage. Celui-ci comprend essentiellement deux pièces auxiliaires rigides 24₁ et 24₂ articulées respectivement autour de deux axes horizontaux B₁ et B₂ parallèles entre eux et parallèles à l'axe A. L'axe B₁ est matérialisé par un arbre 26 (figure 2) qui traverse également les flasques 14 et 16. Cet arbre porte deux bras transversaux 28₁ et 30₁ qui s'étendent de part et d'autre de l'axe B₁ et qui ont des extrémités symétriques 32₁ et 34₁. Les bras transversaux 28₁ et 30₁ ont tous les deux la même longueur, à savoir une longueur égale à b. Les extrémités 32₁ et 34₁ servent de supports à des rouleaux respectivement 36₁ et 38₁ montés à rotation libre autour d'axes horizontaux 40₁ et 42₁ parallèles à l'axe B₁. A l'une des extrémités de l'arbre 26 matérialisant l'axe B₁ est calé en rotation un pignon denté 44₁ qui engrène directement avec un pignon denté 44₂ de même diamètre calé sur l'arbre d'axe B₂ de la pièce auxiliaire 24₂. La pièce 24₂ est rigoureusement identique à la pièce 24₁ et comporte également deux bras 28₂ et 30₂, chacun de longueur b, portant également des rouleaux d'extrémité 36₂ et 38₂. Les pignons 44₁ et 44₂ constituent des moyens de synchronisation propres à entraîner les pièces auxiliaires 24₁ et 24₂ à des vitesses angulaires égales en valeur absolue, mais de sens opposés.

Par ailleurs, le pignon de synchronisation 44₁ engrène directement avec un pignon 46 calé sur l'arbre 12 d'entraînement du bras 10.

Les extrémités des bras transversaux des deux pièces auxiliaires sont propres à s'appuyer contre une partie rectiligne 48 d'un organe 50 mobile en translation et soumis à un effort de rappel vers une position initiale L₀ (figure 1) proportionnelle à la distance d entre cette position initiale et la position L occupée par ledit organe mobile.

Dans l'exemple, cet effort de rappel est assuré par deux moyens de rappel 52 et 54 travaillant à la compression. Dans l'exemple, ces deux organes sont des blocs en mousse élastique, par exemple en polyuréthane, qui possèdent une raideur constante.

L'ensemble précité est calé de telle sorte que, lorsque le bras de robot est vertical ( ϑ = 0), les extrémités des bras transversaux respectifs des pièces auxiliaires 24₁ et 24₂ appuient simultanément sur la partie rectiligne 48 dans sa position initiale L₀. Dans cette position initiale, les bras 28₁ et 30₁ de la pièce 24₁ et les bras 28₂ et 30₂ de la pièce 24₂ sont horizontaux et les quatre rouleaux s'appuient sur la surface supérieure de la partie rectiligne 48.

Compte tenu des pignons 46, 44₁ et 44₂, les pièces 24₁ et 24₂ tournent à une vitesse angulaire égale, en valeur absolue, à la moitié de la vitesse angulaire du bras 10.

Si, à partir de la position initiale précitée, le bras 10 est entraîné en rotation de manière à faire un angle ϑ par rapport à la verticale ascendante (figure 1), les pièces auxiliaires 24₁ et 24₂ prennent une position dans laquelle les bras correspondants font un angle ϑ /2 par rapport à la partie 48. Dans la position montrée à la figure 1, ce sont les rouleaux d'extrémité 38₁ et 38₂ qui s'appliquent sur la surface supérieure 48 de la partie mobile 50. Dans toutes les positions, autres que la position initiale précitée, on a toujours en appui, soit deux rouleaux 38₁ et 38₂, soit deux rouleaux 36₁ et 36₂ sur la face supérieure de la partie 48. Il en résulte que la résultante F des efforts d'appui se situe dans le plan médian compris entre les axes B₁ et B₂ et s'étendant perpendiculairement à la partie 48.

Dans la position initiale précitée, l'organe mobile 50 n'est soumis à aucun effort de rappel. Si l'on désigne par K la constante de proportionnalité entre l'effort de rappel d'un ressort 52 ou 54 et l'amplitude du déplacement de l'organe mobile, il faut que cette constante et la distance b, c'est-à-dire la longueur de chacun des bras transversaux, soit choisie de telle sorte que l'équilibrage soit assuré.

On peut montrer, en reprenant les calculs indiqués dans le Brevet français précité, que l'on doit satisfaire dans ce cas la relation 1/2 Kb² = PR pour l'ensemble des deux pièces auxiliaires.

Au lieu d'utiliser deux pièces auxiliaires 24₁ et 24₂, il serait possible d'utiliser quatre pièces auxiliaires en en ajoutant deux autres, 24₃ et 24₄, comme indiqué en trait fantôme sur la figure 1. Les pièces 24₃ et 24₄ possèdent des axes respectifs B₃ et B₄ parallèles et coplanaires avec les axes B₁ et B₂ et des pignons dentés 44₃ et 44₄ engrénant respectivement avec le pignon 44₁ et avec le pignon 44₂. De cette manière, les quatre pièces auxiliaires tournent à la même vitesse angulaire, en valeur absolue, mais deux à deux en sens opposés. En pareil cas, il faudrait utiliser un organe mobile 50 de dimension adaptée et déplacer le cas échéant les organes de rappel 52 et 54. En variante, on pourrait prévoir un "matelas" d'organes de rappel répartis entre la surface inférieure de l'organe 50 et le fond 18.

Dans une autre variante, il est possible de prévoir un second organe mobile 56, comme montré en trait fantôme sur la figure 1, symétrique de l'organe mobile 50 par rapport au plan des axes des pièces auxiliaires. Ce second organe mobile est alors soumis à un effort de rappel de sens opposé à celui de l'organe mobile précité, et cela au moyen de deux organes de rappel 58 et 60. Dans la position initiale occupée par les deux organes mobiles, les extrémités des bras transversaux des pièces auxiliaires appuient toutes simultanément sur les deux organes mobiles 50 et 56. Grâce aux deux organes mobiles 50 et 56, on peut d'une part augmenter le couple d'équilibrage généré par le dispositif et d'autre part diminuer les contraintes subies par les axes des pièces auxiliaires et par les paliers dans lesquels tournent ces axes. En pareil cas, il convient de satisfaire la relation Kb² = PR.

Comme on peut le constater sur la figure 2, l'organe mobile 50 n'a pas besoin de guidage particulier puisqu'il subit des efforts symétriques, d'un côté de la part des organes ressort 52 et 54 et, de l'autre côté, de la part des bras transversaux des pièces auxiliaires, et cela quelle que soit la longueur desdits bras transversaux. On peut ainsi équilibrer des bras de robot ou analogue, de poids très lourds.

Le dispositif précité est particulièrement peu encombrant et peut s'adapter facilement à un bras de robot existant, sans qu'il soit nécessaire de lui faire subir de modifications ou transformations.

Il est à noter que le dispositif de l'invention peut également fonctionner, mais d'une façon moins rigoureuse, avec des bras de robot dont l'axe de rotation est incliné sur l'horizontale.

Le dispositif est capable de compenser des forces de toute nature, à condition qu'elles génèrent, sur l'axe de rotation du mouvement à contrôler, des variations de couple pouvant être assimilées à une fonction sinusoïdale en fonction de l'angle dudit mouvement de rotation et à condition que l'amplitude de cette sinusoïde soit relativement constante.

## Revendications

1. Dispositif d'équilibrage des forces agissant sur un bras de robot ou analogue, articulé en rotation autour d'un axe, ce dispositif comprenant une pièce auxiliaire rigide (24₁) articulée autour d'un axe (B₁) parallèle à celui (A) du bras de robot (10), ladite pièce comportant deux bras transversaux (28₁,30₁)s'étendant de part et d'autre de l'axe et ayant des extrémités symétriques par rapport à cet axe, ces extrémités étant propres à s'appuyer contre une partie rectiligne (48) d'un organe (50) mobile en translation soumis à un effort de rappel vers une position initiale, proportionnel à la distance (d) entre cette position initiale et la position occupée par l'organe mobile, des moyens d'entraînement en rotation de la pièce auxiliaire autour de son axe à une vitesse angulaire égale, en valeur absolue, à la moitié de celle du bras de robot, caractérisé en ce qu'il comprend au moins une autre pièce auxiliaire rigide (24₂) de manière à former un nombre pair de pièces auxiliaires articulées respectivement autour d'axes (B₁,B₂) parallèles et coplanaires, et supportant chacune deux bras transversaux ; des moyens de synchronisation (44₁,44₂) propres à entraîner en rotation lesdites pièces auxiliaires à des vitesses angulaires égales en valeur absolue, mais deux à deux en sens opposés ; l'une au moins des pièces auxiliaires étant couplée auxdits moyens d'entraînement en rotation ; l'ensemble étant calé de telle sorte que, lorsque le bras de robot est dans une position dans laquelle le couple résultant appliqué autour de l'axe d'articulation du bras par les forces précitées est nul, les extrémités des bras transversaux de toutes les pièces auxiliaires appuient simultanément sur la partie rectiligne (48) dans sa position initiale, et en ce que la partie rectiligne (48) de l'organe mobile (50) est soumise à l'action de moyens de rappel (52,54) exerçant des forces de rappel dont la résultante est sensiblement coaxiale à la résultante des forces d'appui des extrémités des bras transversaux.

2. Dispositif selon la revendication 1, caractérisé en ce qu'il comprend deux pièces auxiliaires (24₁,24₂) articulées respectivement autour de deux axes parallèles (B₁,B₂).

3. Dispositif selon l'une des revendications 1 et 2, caractérisé en ce que les moyens de synchronisation des pièces auxiliaires comprennent un ensemble de pignons (44₁,44₂) de même diamètre, calés respectivement sur les axes (B₁,B₂) des pièces auxiliaires et coopérant directement entre eux, en sorte qu'une pièce auxiliaire soit entraînée en rotation en sens opposé par rapport à la ou les pièces auxiliaires immédiatement adjacentes.

4. Dispositif selon la revendication 3, caractérisé en ce que l'un (44₁) des pignons de synchronisation fait également partie des moyens d'entraînement.

5. Dispositif selon la revendication 4, caractérisé en ce que ledit pignon de synchronisation (44₁) coopère avec un pignon (46) qui est calé sur l'axe (A) de rotation du bras de robot et qui a un diamètre moitié de celui du pignon de synchronisation.

6. Dispositif selon l'une des revendications 1 à 5, caractérisé en ce que les moyens de rappel travaillent à la compression.

7. Dispositif selon la revendication 6, caractérisé en ce que les moyens de rappel (52,54) sont des blocs en mousse élastique, par exemple en polyuréthane.

8. Dispositif selon l'une des revendications 1 à 7, caractérisé en ce qu'il comprend un second organe mobile (56) symétrique de l'organe mobile (50) par rapport au plan des axes des pièces auxiliaires, ce second organe mobile étant soumis à un effort de rappel de sens opposé à celui de l'organe mobile précité (50), en sorte que, dans la position initiale occupée par les deux organes mobiles, les extrémités des bras transversaux de toutes les pièces auxiliaires appuient simultanément sur les deux organes mobiles.

## Claims

1. Apparatus for counterbalancing the forces acting on a robot arm or the like which is rotatably articulated about an axis, said apparatus comprising a rigid auxialiary piece (24₁) articulated about an axis (B₁) parallel to that (A) of the robot arm (10), the said piece comprising two tranverse arms (28₁,30₁) extending on both sides of the axis and having extremities symmetrical with respect to this axis, these extremities being arranged to bear against a rectilinear part (48) of a member (50) that is movable in translation and subjected to a restoring force towards an initial position that is proportional to the distance (d) between the initial position and the position occupied by the moveable member, and means for entrainment in rotation of the auxiliary piece about its axis at an angular speed equal in absolute value to half that of the robot arm, characterised in that it comprises at least one other auxiliary rigid piece (24₂) so as to form an even number of auxiliary pieces articulated respectively about axes (B₁,B₂) that are parallel and coplaner, and each supporting two transverse arms; synchronising means (44₁,44₂) arranged to entrain in rotation the said auxiliary pieces at angular speeds that are equal in absolute value but, in pairs, of opposite sense; at least one of the auxiliary pieces being coupled to the said means for entrainment in rotation; the assembly being so arranged that when the robot arm is in a position in which the resultant couple applied about the axis of articulation of the arm by the aforesaid forces is zero, the extremities of the transverse arms of all the auxiliary pieces bear simultaneously on the rectilinear part (48) in its initial position, and in that the rectilinear part (48) of the movable member (50) is subject to the action of restoring means (52,54) exercising restoring forces of which the resultant is substantially coaxial with the resultant of the pressing forces of the extremities of the tranverse arms.

2. Apparatus according to Claim 1, characterised in that it comprises two auxiliary pieces (24₁,24₂) respectively articulated around two parallel axes (B₁,B₂).

3. Apparatus according to one of Claims 1 and 2, characterised in that the means for synchronising the auxiliary pieces comprises an assembly of pinions (44₁,44₂) of the same diameter, fixed respectively on the axes (B₁,B₂) of the auxiliary pieces and cooperating directly with one another so that one auxiliary piece is entrained in rotation in an opposite sense with respect to the immediately adjacent auxiliary piece or pieces.

4. Apparatus according to Claim 3, characterised in that one (44₁) of the synchronising pinions also forms part of the means of entrainment.

5. Apparatus according to Claim 4, characterised in that the said synchronising pinion (44₁) cooperates with a pinion (46) that is fixed on the axis (A) of rotation of the robot arm and which has a diameter one half that of the synchronising pinion.

6. Apparatus according to one of Claims 1-5, characterised in that the restoring means act in compression.

7. Apparatus according to Claim 6, characterised in that the restoring means (52,54) are blocks of elastic foam, for example of polyurethane.

8. Apparatus according to one of Claims 1-7, characterised in that it comprises a second movable member (56) symmetrical with the movable member (50) with respect to the plane of the axes of the auxiliary pieces, this second movable member being subject to a restoring force in a direction opposed to that of the aforesaid movable member (50), so that in the initial position occupied by the two moveable members, the extremities of the transverse arms of all of the auxiliary pieces bear simultaneously on the two movable members.

## Patentansprüche

1. Gewichtsausgleichsvorrichtung für einen Roboterarm oder dergleichen, der für eine Drehung um eine Achse angelenkt ist, mit einem starren Hilfsstück (24₁), das an einer Achse (B₁) angelenkt ist, die parallel zu der Achse (A) des Armes des Roboters (10) ausgerichtet ist, wobei dieses Hilfsstück zwei transversale Arme (28₁, 30₁) umfaßt, die sich auf beiden Seiten dieser Achse erstrecken und symmetrische Enden in Bezug auf diese Achse aufweisen und wobei diese Enden geeignet sind, sich gegen einen geraden Abschnitt (48) eines Elementes (50) abzustützen, das für eine Translationsbewegung beweglich ist und einer in Richtung seiner Ausgangsposition wirkende Rückholkraft unterworfen ist, die proportional zum Abstand (d) zwischen dieser Ausgangsposition und der von dem beweglichen Element angenommenen Position ist, und mit Antriebseinheiten zur Drehung des Hilfsstückes um seine Achse mit einer Winkelgeschwindigkeit, die in ihrem absoluten Wert gleich der Hälfte der Winkelgeschwindigkeit des Armes des Roboters ist, **dadurch gekennzeichnet**, daß sie mindestens ein weiteres starres Hilfsstück (24₂) umfaßt, um eine gerade Anzahl von Hilfsstücken zu bilden, die jeweils um Achsen (B₁, B₂) angelenkt sind, die zueinander parallel und koplanar sind und die beide transversale Arme stützen, mit Synchronisationsmitteln (44₁, 44₂), die geeignet sind, die besagten Hilfsstücke mit Winkelgeschwindigkeiten zu drehen, die in ihrem absoluten Wert gleich sind, aber die jeweils paarweise zueinander in entgegengesetzter Drehrichtung stehen, wobei mindestens ein Hilfsstück mit der besagten Einheit zum Drehantrieb verbunden ist, und die Einheit dergestalt befestigt ist, daß, wenn der Roboterarm in einer Position ist, in der ein auf die Anlenkachse des Armes durch die vorgenannten Kräfte wirkendes resultierendes Drehmoment Null ist, die Enden der transversalen Arme von allen Hilfsstücken sich gleichzeitig auf den geraden Abschnitt (48) in dessen Ausgangsposition stützen und daß der gerade Abschnitt (48) des beweglichen Elementes (50) der Wirkung der Rückholmittel (52, 54) unterworfen wird, die eine Rückholkraft ausüben, deren Resultierende im wesentlichen koaxial zu der Resultierenden der Abstützkräfte der Enden der transversalen Arme ist.

2. Vorrichtung nach Anspruch 1, dadurch gekennzeichnet, daß die Vorrichtung zwei Hilfsstücke (24₁, 24₂) aufweist, die um zwei parallele Achsen (B₁, B₂) angelenkt sind.

3. Vorrichtung nach Anspruch 1 oder Anspruch 2, dadurch gekennzeichnet, daß die Synchronisationsmittel der Hilfsstücke eine Anzahl von Ritzeln (44₁, 44₂) desselben Durchmessers aufweisen, die jeweils auf den Achsen (B₁, B₂) der Hilfsstücke aufgesetzt sind und untereinander direkt zusammenwirken, so daß ein Hilfsstück in seiner Rotationsbewegung in entgegengesetzter Richtung bezüglich des oder der unmittelbar benachbarten Hilfsstücke angetrieben wird.

4. Vorrichtung nach Anspruch 3, dadurch gekennzeichnet, daß eines (44₁) der Synchronisationsritzel ebenfalls Teil der Antriebseinheit ist

5. Vorrichtung nach Anspruch 4, dadurch gekennzeichnet, daß das Synchronisationsritzel (44) mit einem Ritzel (46) zusammenwirkt, welches auf der Achse (A) zur Drehung des Roboterarmes aufgesetzt ist und dessen Durchmesser der Hälfte desjenigen des Synchronisationsritzels entspricht.

6. Vorrichtung nach einem der Ansprüche 1 bis 5, dadurch gekennzeichnet, daß die Rückholmittel als Kompressionsrückholmittel ausgestaltet sind.

7. Vorrichtung nach Anspruch 6, dadurch gekennzeichnet, daß die Rückholmittel (52, 54) nachgiebige Schaumstoffblöcke, zum Beispiel aus Polyurethan, sind.

8. Vorrichtung nach einem der Ansprüche 1 bis 7, dadurch gekennzeichnet, daß sie ein zweites bewegliches Element (56) umfaßt, welches symmetrisch zu dem beweglichen Element (50) bezüglich der Ebene der Achsen der Hilfsstücke ist, wobei dieses zweite bewegliche Element einer Rückholkraft in einer Richtung ausgesetzt ist, die zu der Richtung des besagten beweglichen Elementes (50) entgegengesetzt ausgerichtet ist, so daß in der Ausgangsposition, die von den beweglichen zwei Elementen eingenommen wird, sich die Enden der transversalen Arme von allen Hilfsstücken gleichzeitig auf den beiden beweglichen Elementen abstützen.
